**Europäisches Patentamt**

**European Patent Office**

**Office européen des brevets**

(11) Veröffentlichungsnummer: **0 521 277 A2**

## (12) EUROPÄISCHE PATENTANMELDUNG

(21) Anmeldenummer: **92108221.0**

(22) Anmeldetag: **15.05.92**

(51) Int. Cl.5: **B30B 15/06**

(30) Priorität: **29.06.91 DE 9108052 U**

(43) Veröffentlichungstag der Anmeldung:
**07.01.93 Patentblatt 93/01**

(84) Benannte Vertragsstaaten:
**DE FR GB**

(71) Anmelder: **SIGRI GREAT LAKES CARBON GmbH**
**Rheingaustrasse 182**
**W-6200 Wiesbaden 1(DE)**

(72) Erfinder: **Gruber, Udo, Dipl.-Ing. (FH)**
**von Rehlingen-Strasse 48a**
**W-8902 Neusäss(DE)**

(54) **Druckfestes, wärmeisolierendes Teil eines Pressstempels für eine Heisspresse.**

(57) Aus Kohlenstoffaserfilz und einer durch Verkoken eines kohlenstoffhaltigen Bindemittels erhaltenen Matrix bestehendes druckfestes, wärmeisolierendes Zwischenstück für den Preßstempel einer Heißpresse. Das Zwischenstück hat eine Druckfestigkeit von mindestens 30 MPa und höchstens 60 MPa bei einer Wärmeleitfähigkeit von mindestens 1,5 W/mK und höchstens 10 W/mK.

Fig. 1

Die Erfindung betrifft ein druckfestes, wärmeisolierendes Teil eines Preßstempels für eine Heißpresse.

Beim an sich bekannten Heißpressen wird ein temperatur- und druckbeständiger Stempel mittels einer Presse in die das zu verpressende Gut enthaltende, auf hohe Temperaturen erhitzte Matrize eingedrückt und dort für die Zeit der auszuführenden Verdichtung, die häufig den Charakter eines Reaktionssinterns hat, bei hoher Temperatur und hohem Druck belassen. An die Teile, die den das zu verpressende Gut enthaltenden Raum einschließen, werden bei diesem Verfahren höchste Anforderungen gestellt. Sie müssen ohne Schaden zu nehmen, hohen Preßdrücken bei hohen Temperaturen, die je nach Anwendungsfall 1500 bis 2000 °C überschreiten können, widerstehen bzw. hohe Drücke übertragen können. Außerdem dürfen sie mit dem zu verpressenden Gut unter den extremen Reaktionsbedingungen nicht reagieren und müssen in der benötigten Gestalt mit tragbarem Aufwand herstellbar sein.

Diesen Anforderungen genügen nur wenige hochtemperaturbeständige Stoffe, wie Keramiken auf Basis Aluminiumoxid oder Siliciumcarbid, Graphit, Metalle wie Wolfram und Molybdän oder Sonderlegierungen auf Basis Molybdän. Wegen seiner hervorragenden Temperaturbeständigkeit, der Eigenschaft des Festigkeitszuwachses mit steigender Temperatur und seiner Reaktionsträgheit gegenüber vielen Stoffen ist Graphit der bevorzugte Werkstoff für Heißpreßmatrizen und -Stempel. Mit Ausnahme von Aluminiumoxid sind alle oben aufgeführten Werkstoffe nicht oxidationsbeständig. Die nachteiligen Wirkungen von Oxidationen sind bei der Verwendung der Werkstoffe als innen liegende Teile einer Heisspresse wie Preßmatrizen oder Suszeptoren von Induktionsheizanlagen mit relativ einfachen Mitteln wie weitgehende gasdichte Kapselung oder/und Arbeiten unter Schutzgas beherrschbar.

Anders ist die Situation bei Preßstempeln, die mit der sich auf Reaktionstemperatur befindlichen Heißpreßform und dem zu pressenden Gut unter Druck in Verbindung stehend aus der Preßform und aus der diese Form umgebenden Ofeneinhausung herausragen und an ihrem anderen Ende mit dem in der Regel gekühlten Preßkopf der Presse verbunden sind. Als räumlich ausgedehnte Teile, die beim Einfahren in die und beim Herausfahren aus der Preßform bewegt werden müssen, lassen sie sich nicht ohne großen Aufwand gegen Oxidation schützen, was besonders bei gewerblich betriebenen Anlagen zu Problemen führt. Durch Oxidation werden die Preßstempel geschwächt und sie müssen deshalb vorzeitig ausgewechselt werden, was mit Stillstandszeiten der Apparatur und mit hohem Aufwand verbunden ist. Eine der Ursachen für die Oxidation der Preßstempel während des Verfahrensablaufs ist die hohe Wärmeleitfähigkeit der metallischen Werkstoffe und des Graphits, die im Falle geeigneter Graphitqualitäten bei 100 bis 150 W/mK liegt. Diese Stoffeigenschaft führt zu einer großen Wärmeabfuhr aus der Reaktionszone in die dem oxidativen Angriff ausgesetzten Zonen des Preßstempels. Die so aus der Reaktionszone abgeführte Wärme fehlt dort und muß durch die Heizung des Preßwerkzeugs im Maße der Ableitung ständig ersetzt werden. Dies führt zu erhöhtem Energieverbrauch und zu verlängerten Reaktions- oder Taktzeiten der Anlage. Zu den verlängerten Taktzeiten kommt es, weil der Preßstempel wegen der Wärmeableitung durch ihn als relativ gesehen kältester und noch dazu innen liegender Teil der Preßreaktionszone anzusehen ist, der im wesentlichen indirekt mittels Wärmeübergangs von der Preßmatrize aus nacherwärmt werden muß. Für ein schnelles Nachheizen des Preßstempels ist jedoch eine entsprechende, höhere Temperatur der Matrize Voraussetzung. Diese Temperaturdifferenz kann aus Gründen der Werkstoffstabilität und der Forderung nach möglichst homogenen thermischen Preß- oder Reaktionsbedingungen nicht zu hoch gewählt werden. Eine Folge dieses Sachverhalts ist es, daß die Wärme nicht im gewünschten Umfang nachgeführt wird und somit bei einer tatsächlichen Reaktionstemperatur, die tiefer als die verfahrenstechnisch günstigste ist, gearbeitet werden muß, was zu einer Verlängerung der Reaktionszeit führt. Ein Heraufsetzen des gesamten Temperaturniveaus zum Zwecke der Verkürzung der Reaktionszeit brächte auch keine Verbesserung der Gesamtsituation, da dann die Nebenzeiten für Aufheizen und Abkühlen verlängert und zusätzlich Oxidationen am Preßstempel verstärkt werden würden.

Der Erfindung lag deshalb die Aufgabe zugrunde, den Preßstempel für eine Heißpresse so zu modifizieren, daß der Wärmeabfluß aus der eigentlichen Verdichtungs- und Reaktionszone über den Preßstempel stark eingeschränkt ist und die vorbeschriebenen negativen Wirkungen eines Wärmeabflusses stark abgeschwächt werden bzw. vermieden werden.

Die Aufgabe wird durch den kennzeichnenden Teil des Schutzanspruchs 1 gelöst. Die Schutzansprüche 2 bis 6 enthalten vorteilhafte Ausgestaltungen der erfinderischen Lösung.

Ein kohlenstoffhaltiger Schichtstoff aus mit kohlenstoffhaltigen Bindemitteln imprägniertem Kohlenstoffilz, der carbonisiert oder graphitiert sein kann, ist aus der deutschen Patentschrift Nr. 1 287 499 bekannt. Er soll als biegsamer Werkstoff für Gegenstände hoher mechanischer Festigkeit und Hitzebeständigkeit, wie z.B. Diaphragmen, Berstscheiben oder andere Spannung aufnehmende Teile dienen. Die Verwendung eines derartigen Werkstoffs als druckfestes, nicht biegsames oder kompressibles und dabei wärmeisolierendes Teil eines Heißpressstempels ist durch diese Patentschrift nicht nahegelegt.

Die Verwendung von aus Kohlenstoffilzen hergestellten kohlenstoffaserverstärkten Kohlenstoff- oder

2

Graphitkörpern, im folgenden auch CFC-Körper genannt, für Formen von Heißpressen ist in der deutschen Patentschrift Nr. 1 571 390 beschrieben. Es handelt sich hier entweder um Teile von hoher Dichte und hoher Festigkeit und damit, wie der Fachmann weiß, schlechtem Wärmeisolationsvermögen oder um Teile von geringer Dichte und gutem Wärmeisolationsvermögen. Das Wärmeisolationsvermögen von Kohlenstoffilzen oder von mit Kohlenstoffträgern imprägnierten und dann verkokten Kohlenstoffilzen ist seit langem bekannt und wird z.B. im Ofenbau genutzt. Es handelt sich bei allen diesen Anwendungen in der Wärmeisoliertechnik um zwar gut wärmeisolierende CFC-Körper, die jedoch einer Druckbelastung, wie sie in Stempeln von Pressen auftreten, nicht standhalten. Nochmals zusammenfassend, waren also aus Kohlenstoffilzen als verstärkender Komponente bestehende CFC-Körper bekannt, die entweder druckfest aber gut wärmeleitend oder die zwar gut wärmedämmend aber nicht druckfest waren. Seit dem Bekanntwerden dieses Standes der Technik hat es, obwohl die vorgenannten Schwierigkeiten beim Heißpressen seit Beginn der Anwendung dieses Verfahrens bekannt waren, mehr als 20 Jahre gedauert, einen CFC-Körper für Stempel von Heißpressen Zu schaffen, der sowohl genügend druckfest, als auch hinreichend wärmedämmend ist.

Die Erfindung besteht aus einem druckfesten, wärmeisolierenden Teil oder Zwischenstück aus kohlenstofffaserverstärktem Kohlenstoff, das zwischen zwei durch einen senkrecht zur Längsachse des Preßstempels geführten Schnitt entstandene Abschnitte gelegt wird. Das druckfeste wärmeisolierende Teil kann auch zwischen dem gekühlten Preßkopf der Presse und dem Preßstempel angeordnet sein. Verallgemeinert wird es immer dort angeordnet, wo in der Preßapparatur ein starker Wärmeabfluß von Zonen hoher Temperatur über den Preßstempel zu Zonen niedrigerer Temperatur verhindert werden soll. Der genaue Ort hängt von der jeweils verwendeten Preßapparatur ab und muß aufgrund deren Konstruktion ausgewählt und gegebenenfalls durch zusätzliche Tests festgelegt werden. Eine bevorzugte Position ist die Stelle, an der sich die Übergangszone zwischen dem eher z.B. durch die Ofeneinhausung geschützten Teil und dem der freien Atmosphäre zugänglichen Teil des Preßstempels befindet. Wo es verfahrenstechnisch sinnvoll ist, kann das druckfeste wärmeisolierende Teil auch an anderen Stellen eingesetzt werden. Wichtig ist in jedem Fall, daß das Zwischenstück sich gegenüberliegende Querschnittsflächen der Preßstempelteile mindestens vollständig bedeckt. Es kann mit diesen genau abschließen, z.B. damit der Preßstempel an dieser Stelle noch in den Ofen eingefahren werden kann oder es kann darüber hinaus ragen, z.B. um zusätzlich als Wärmeschutzschild zu wirken. Von besonderer Bedeutung für die Erfindung ist es, daß das druckfeste wärmeisolierende Teil aus einem speziellen, leichten kohlenstofffaserverstärkten Kohlenstoff besteht und eine Festigkeit von mindestens 30 MPa und höchstens 60 MPa in Verbindung mit einer Wärmeleitfähigkeit von mindestens 1,5 W/mK und höchstens 10 W/mK, vorzugsweise von mindestens 2,5 W/mK und höchstens 5 W/mK hat. Ein derartiger, leichter Kohlenstoffkörper besteht aus einem Kohlenstoffaserfilz als verstärkender und einem kohlenstoffhaltigen Bindemittel, das entweder carbonisiert oder carbonisiert und graphitiert ist, als Matrixkomponente. Bevorzugte verstärkende Komponente ist ein Kohlenstoffilz auf Basis von Cellulosefasern. Es können aber auch andere verkokbare Filze als Vorprodukt verwendet werden. Es ist jedoch wichtig, daß für die Herstellung erfindungsgemäßer CFC-Körper Filze ausgewählt werden, die nicht graphitiert sind, d.h. deren thermische Behandlung 1200 °C nicht überschritten hat.

Als kohlenstoffhaltige Matrixvorprodukte werden bevorzugt Kunstharze aus der Gruppe Phenolformaldehydharze, Epoxidharze, Furanharze, deren nach dem Carbonisieren zurückbleibender Koksrückstand eher schlecht graphitierbar ist, verwendet. Es können aber auch andere Binde- und Imprägniermittel, wie z.B. Peche eingesetzt werden. Wie später beschrieben werden wird, müssen die CFC-Körper mehrmals mit einem kohlenstoffhaltigen Mittel imprägniert und danach verkokt werden. Es kann deshalb entweder ein Kohlenstoffträger für alle Imprägnierschritte oder es können verschiedene Kohlenstoffträger nacheinander eingesetzt werden, z.B. ein Steinkohlenteerpech als erstes Matrixvorprodukt und nach dessen Carbonisierung entsprechend geeignete Kunstharze für die folgenden Imprägnierschritte, die vor allem der Erhöhung der Druckfestigkeit der Körper dienen. Es ist auch möglich, in annähernd umgekehrter Weise zu verfahren, d.h., zuerst ein Kunstharz einzusetzen und dann einen der folgenden Imprägnierschritte mit Pech auszuführen. Beim Aufbau der Kohlenstoffmatrix muß darauf abgezielt werden, daß einerseits eine möglichst hohe Druckfestigkeit und andererseits eine möglichst niedrige Wärmeleitfähigkeit des CFC-Körpers erreicht wird. Die Körper können in carbonisiertem, d.h. in gebranntem oder in graphitiertem Zustand verwendet werden. Welcher Zustand gewählt wird, richtet sich nach den Arbeitsbedingungen im Anwendungsfall. Es sollte vermieden werden, daß die Temperatur des Preßstempels beim Heißpressen über der Endbehandlungstemperatur des in den Preßstempel eingefügten druckfesten wärmeisolierenden Teils liegt, da sonst noch störende Eigenschafts- und Dimensionsänderungen des druckfesten wärmeisolierenden Teils auftreten können.

Die druckfesten wärmeisolierenden Teile besitzen herstellungsbedingt eine gewisse, aus der geometrischen Oberfläche und dem gaszugänglichen Porensystem bestehende Oberfläche, die bei hohen Temperaturen oxidieren kann. Obwohl die Oxidationsrate wie Einsatzversuche gezeigt haben, im Vergleich zur Oxidation des Preßstempels gering ist, ist es sinnvoll, die Oberfläche mit einem an sich bekannten oxidationshemmenden Mittel zu überziehen. Dies geschieht vorzugsweise durch Einstreichen, Besprühen oder Imprägnieren mit einer Lösung von Aluminiumdihydrogenphosphat ($Al(H_2PO_4)_3$) oder von Ammoniumdihydrogenphosphat ($NH_4H_2PO_4$).

Die erfindungsgemäßen druckfesten wärmeisolierenden Teile werden aus größeren Körpern, die aus Gründen einer rationelleren Herstellungsweise gefertigt worden waren, herausgeschnitten. Je nach Art des Trennverfahrens haben sie eine mehr oder weniger glatte Oberfläche. Bei Vorliegen größerer Oberflächenunebenheiten kann es bei hohen Preßdrücken vorkommen, daß sich in dem eingelegten isolierenden Teil, ausgelöst durch nach außen ragende Unebenheiten, an den dort auftretenden Spannungsspitzen Risse bilden, die die Lebensdauer der Teile verringern. Eine Möglichkeit zur Verhinderung derartiger Risse besteht im Auflegen oder Aufkleben einer Lage von Graphitfolie auf die gefährdeten Flächen. Da Graphitfolien, wie z.B. die im Fachhandel erhältliche ®Sigraflex-Folie senkrecht zur Folienoberfläche eine sehr schlechte Wärmeleitfähigkeit aber parallel dazu eine ausgezeichnete Wärmeleitfähigkeit besitzen, kommt bei dieser Verfahrensweise noch ein weiterer positiver Effekt zum Tragen. Die Graphitfolienzwischenlage verstärkt die Isolierwirkung des druckfesten wärmeisolierenden Teils und leitet die Wärme seitlich nach außen in kühlbare Zonen ab.

Im folgenden wird beispielhaft die Herstellung eines druckfesten wärmeisolierenden Teils beschrieben, wie es in den später dargestellten Anwendungsbeispielen verwendet worden ist.

14 Lagen, Maße 400 x 400 x 10 mm, eines bis zu einer Temperatur von 1000 °C verkokten Cellulosefilzes (Flächengewicht 900 bis 1100 $g/m^2$) wurden mit einem Phenolformaldehydharz vom Resoltyp imprägniert und nach dem Ablaufenlassen des Imprägniermittels zu einem Stapel von ca. 400 x 400 x 140 mm im Wechsel von 0 ° zu 90 ° übereinander geschichtet. Der Harzgehalt des Filzes betrug 57 Gew.-%. Dieser Stapel wurde in einer heizbaren hydraulischen Presse auf ca. 50 mm zusammengepreßt und unter einem Preßdruck von 7 bar nach folgendem Programm ausgehärtet:

| Raumtemperatur | bis 80 °C | 30 Minuten |
| | 80 °C bis 130 °C | 60 Minuten |
| Haltezeit bei | 130 °C | 240 Minuten. |

Der so erhaltene, poröse Verbundkörper mit ausgehärteter Harzmatrix hatte eine geometrische Dichte von 0,60 $g/cm^3$ und wurde unter Ausschluß von Sauerstoff unter langsamem Aufheizen innerhalb von 140 bis 150 Stunden bis zu einer Temperatur von 1000 °C erhitzt und dabei verkokt. Danach war der Körper in Preßrichtung (Dicke) um 0,7 % und senkrecht zur Preßrichtung (Breite) um 0,4 % geschrumpft. Die geometrische Dichte betrug 0,4 $g/cm^3$. Der so erhaltene Körper hatte noch eine ungenügende Druckfestigkeit und wurde deshalb nacheinander noch dreimal mit dem eingangs erwähnten Phenolharz erschöpfend imprägniert. Nach jedem der Imprägnierschritte wurde das Kunstharz bis zu einer Endtemperatur von 1000 °C verkokt. Bei dieser Behandlung stiegen die geometrische Dichte, die Druckfestigkeit und die Wärmeleitfähigkeit sukzessive an. Bei der Verkokung nach dem letzten Imprägnieren wurde die Temperatur ohne Einhaltung eines besonderen Programms auf mindestens 2000 °C erhöht, um einen dimensionsstabilen, entgasten CFC-Körper zu erhalten. Dieser Körper hatte eine geometrische Dichte von 1,1 $g/cm^3$, eine Druckfestigkeit von 39,6 MPa und eine Wärmeleitfähigkeit von 3,6 W/mK und war für die Verwendung als erfindungsgemäßes druckfestes wärmeisolierendes Teil geeignet. Ein üblicherweise verwendeter Graphitstempel einer Heißpresse hat eine um ca. 30mal höhere Wärmeleitfähigkeit .

Die Erfindung wird im folgenden anhand zweier Figuren und eines Ausführungsbeispiels beispielhaft erläutert:

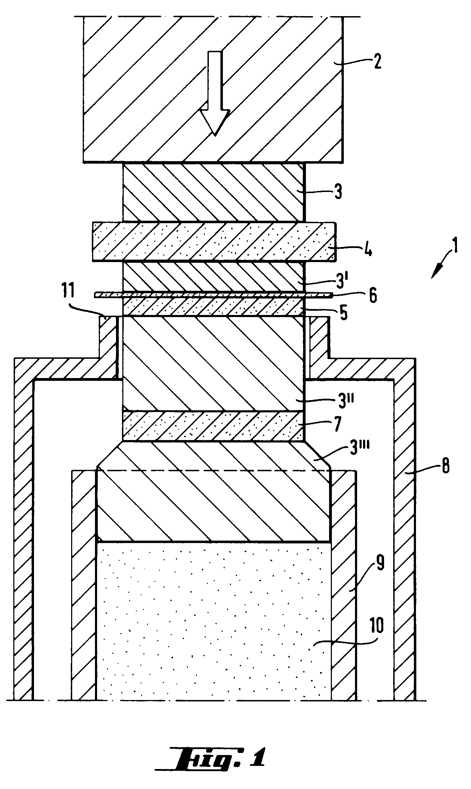

Figur 1 zeigt in schematischer Darstellung einen Längsschnitt durch eine Heißpreßvorrichtung 1, die aus einem Ofen 8, einer Heißpreßmatrize 9, einem in die Matrize 9 paßförmig hineinragenden und mit Zwischenlagen aus druckfesten, wärmeisolierenden Scheiben 4, 5, 6, 7 versehenen Preßstempel 3, 3', 3''. 3''', der über einen mit einer nicht dargestellten Presse verbundenen, wassergekühlten Preßkopf 2 belastet werden kann und der auf das in der Matrize 9 befindliche, mittels einer nicht dargestellten, die Matrize umgebenden Heizung auf hohe Temperatur erhitzte Preßgut 10 einen für eine Heißpreßreaktion notwendigen Druck ausübt, besteht. Ohne mindestens eine der druckfesten wärmeisolierenden Zwischenlagen 4, 5, 6, 7 tritt während des Betriebes der Heißpreßvorrichtung 1 über den Preßstempel 3''', 3'', 3', 3 eine starke Wärmeableitung aus der Reaktionszone 10 bzw. aus dem Ofen 8, verbunden mit den zuvor geschilderten Nachteilen ein. Diese negativen Wirkungen werden durch die Verwendung der druckfesten wärmeisolierenden Scheiben 4, 5, 6, 7, die wahlweise in einer der eingezeichneten oder in mehr als einer der eingezeichneten Positionen eingesetzt sein können, stark reduziert. Im Regelfall reicht der Einsatz eines der erfindungsgemäßen Zwischenstücke 4, 5, 6, 7 in einer Position aus. In Figur 1 sind die wichtigsten möglichen Positionen und Formen der druckfesten wärmeisolierenden Teile an nur einem Heißpreßstempel dargestellt, um die verschiedenen Möglichkeiten besser gegenüberstellen und erläutern zu können. 4 zeigt ein druckfestes wärmeisolierendes Zwischenstück, das außerhalb des Ofens 8 angeordnet ist und das über die Umfangskontur des Preßstempels 3, 3' hinausragt. Der über den Umfang des Preßstempels 3, 3' hinausragende Teil dient zusätzlich als Strahlungsschild. Die Zwischenlagen 5 und 6 sollen in der Position des Preßstempels 3, 3', 3'', 3''' bei Beginn des Heißpreßvorgangs gerade soweit oberhalb des Ofenkörpers 8 angeordnet sein, daß sie sich beim Ende dieses Vorgangs gerade am oberen Abschluß 11 des Ofenkörpers 8 befinden. Das druckfeste wärmeisolierende Teil 5 besteht aus einem erfindungsgemäßen kohlenstofffaserverstärkten Kohlenstoffkörper, dessen Außenkontur mit jener des Preßstempels 3', 3'' identisch ist und der bei Ende des Preßvorgangs teilweise in den Hals oder oberen Abschluß 11 des Ofenkörpers 8 eintaucht. 6 symbolisiert eine zwischen das druckfeste wärmeisolierende Teil 5 und den Teil des Stempels 3' eingelegte Graphitfolie, die über den Umfang der Preßstempelanordnung 3'', 5, 3' hinausragt, um auch als Hitzeschild zu dienen, über den die durch das Zwischenstück 5 durchgetretene Wärme seitlich nach außen abgeleitet und dort gegebenenfalls durch Zwangskühlung mittels eines Kühlgases abgeführt werden kann. Außerdem verhindert die Graphitfolie 6 das Auftreten von Rissen im Zwischenstück 5. Bei dieser Anordnung des Zwischenstücks 5 sind die außerhalb der Ofenhülle 8 liegenden Teile des Preßstempels 3', 3 durch Wärmeisolation gegen Oxidation geschützt, während sich die in Richtung der Heißpreßmatrize 9 befindlichen Teile des Preßstempels 3'', 3''' innerhalb des Ofens 8 in einem Raum befinden, der dem Sauerstoff nicht leicht zugänglich ist, bzw. der ohne weiteres unter Schutzgas gehalten werden kann. Als weitere Möglichkeit ist das Zwischenstück 7 direkt über der Heißpreßmatrize 9 aber noch an einem Ort angeordnet, der nicht mehr direkt von der nicht dargestellten Heizung der Heißpreßmatrize 9 beheizt wird. Das druckfeste wärmeisolierende Zwischenstück 7 dämmt hier den Wärmefluß vom heißesten Teil der dargestellten Anlagenteile, der Heißpreßmatrize 9 in die Teile des Preßstempels 3'', 3', 3 und schafft so isotherme Bedingungen im Reaktionsraum 10.

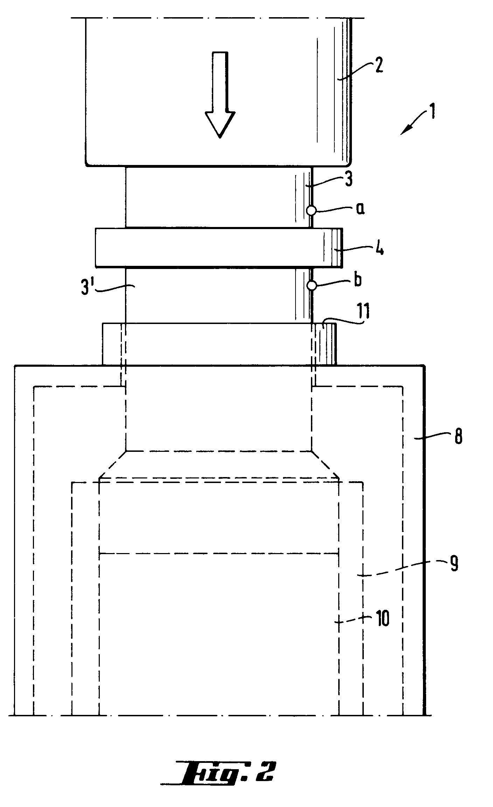

Figur 2 zeigt schematisch eine Seitenansicht einer Heißpreßanordnung 1 mit einer druckfesten wärmeisolierenden Zwischenlage 4 und Temperaturmeßpunkten a und b, die im übrigen im Aufbau der Darstellung in Figur 1 entspricht. Die druckfeste wärmeisolierende Zwischenschicht 4 mit einer Stärke von 5 cm ist ca. 7 cm oberhalb der oberen Begrenzung 11 des Ofens 8 und ca. 8 cm unterhalb des wassergekühlten Preßkopfes 2, der nicht weiter dargestellten Presse angeordnet. Die Temperaturmeßpunkte a und b liegen ca. 2 cm oberhalb (a) und unterhalb (b) des druckfesten wärmeisolierenden Zwischenstücks 4. Tabelle 1 gibt gegenüberstellend zwei Temperaturmeßreihen wieder, bei denen einmal ohne druckfestes wärmeisolierendes Zwischenstück und zum anderen mit dem oben beschriebenen Zwischenstück 4 Heißpressungen vorgenommen wurden.

Tabelle 1

Preßstempel mit druckfestem, wärmeisolierendem Zwischenstück 4

| Temp. d. Heißpreßform [°C] | Aufheizzeit [Stunden] | Temp. am Meßpkt. a [°C] | Temp. am Meßpkt. b [°C] |
|---|---|---|---|
| 1200 | 4,5 | 146 | 715 |
| 1300 | 5,1 | 153 | 768 |
| 1400 | 5,7 | 153 | 780 |
| 1500 | 6,4 | 144 | 808 |
| 1600 | 7,1 | 146 | 856 |
| 1700 | 8,0 | 158 | 906 |
| 1775 | 9,5 | 155 | 910 |

Preßstempel ohne druckfestes, wärmeisolierendes Zwischenstück

| Temp. d. Heißpreßform [°C] | Aufheizzeit [Stunden] | Temp. am Meßpkt. a [°C] | Temp. am Meßpkt. b [°C] |
|---|---|---|---|
| 1400 | 6,1 | 272 | 625 |
| 1500 | 6,9 | 327 | 620 |
| 1600 | 7,8 | 362 | 649 |
| 1700 | 9,3 | 404 | 627 |
| 1720 | 10,5 | 431 | 645 |

Die Meßreihen belegen folgendes:

- das druckfeste wärmeisolierende Zwischenstück 4 hat ein hohes Wärmedämmvermögen
- die Temperatur des Preßstempels unterhalb des druckfesten isolierenden Zwischenstücks (Meßpunkt b) ist vergleichsweise höher und steigt schneller mit steigender Temperatur in der Heißpreßform an
- durch Verwendung des druckfesten wärmeisolierenden Zwischenstücks wird eine höhere Endtemperatur in der Heißpreßmatrize und diese in kürzerer Zeit als bei der Vergleichspressung ohne das druckfeste wärmeisolierende Zwischenstück, bei der außerdem die Endtemperatur hinter der Endtemperatur des Versuchs zurückbleibt, erreicht.

Gegenüber der Verfahrensweise nach dem Stand der Technik hat die Erfindung folgende Vorteile:

1. Verringerung der Oxidation von hochtemperaturbeständigen Preßstempeln, vor allem aus Graphit und damit verbunden, Verlängerung der Standzeiten der Preßstempel.

2. Durch Vorteil nach Pkt. 1, Verringerung von durch Stempelwechsel bedingten Stillstandszeiten der Anlage.

3. Schnelleres Erreichen höherer Temperaturen in der Heißpreßmatrize.

4. Durch Vorteil nach Pkt. 3, Verkürzung der Heißpreßzeiten.

5. Durch geringeren Wärmeabfluß aus der Heißpreßmatrize, Energieersparnis und Vergleichmäßigung der Temperaturverteilung im in der Heißpreßform befindlichen Preßgut.

6. Durch Vorteile nach Punkten 1, 2, 3, 4, Senkung der Betriebskosten, durch Vorteil nach Pkt. 5, Verbesserung der Produktqualität.

**Patentansprüche**

1. Druckfestes, wärmeisolierendes Teil (4, 5, 6, 7) eines Preßstempels (3, 3', 3'', 3 ''') für eine Heißpresse (1),
dadurch gekennzeichnet, daß
   - es ein Körper von flacher Gestalt mit mindestens den Querschnittsabmessungen des Preßstempels (3, 3', 3'', 3'''), ist,
   - es durch senkrecht zur Preßrichtung durch den Preßstempel (3, 3', 3'', 3''') geführte Schnitte entstandene Querschnittsflächen vollständig bedeckt,
   - es entweder direkt an die Enden des Preßstempels (3, 3', 3'', 3''') anschließend oder zwischen Teilen des Preßstempels (3, 3', 3'', 3''') angeordnet ist,
   - es aus einem kohlenstoffaserverstärkten Kohlenstoffkörper (4, 5, 7) mit im Ausgangszustand nicht graphitiertem Kohlenstofffaserfilz als verstärkender und einem kohlenstoffhaltigen Bindemittel, das verkokt oder das verkokt und graphitiert ist, besteht und daß
   - es eine Druckfestigkeit von mindestens 30 MPa und höchstens 60 MPa bei einer Wärmeleitfähigkeit von mindestens 1,5 W/mK und höchstens 10 W/mK hat.

2. Druckfestes, wärmeisolierendes Teil (4, 5, 6, 7) eines Preßstempels (3, 3', 3, 3''') für eine Heißpresse (1) nach Patentanspruch 1,
dadurch gekennzeichnet, daß
es eine Druckfestigkeit von mindestens 30 MPa und höchstens 60 MPa bei einer Wärmeleitfähigkeit von mindestens 2,5 W/mK und höchstens 5 W/mK hat.

3. Druckfestes, wärmeisolierendes Teil (4, 5, 6, 7) eines Preßstempels (3, 3', 3'', 3''') für eine Heißpresse (1) nach den Patentansprüchen 1 und 2,
dadurch gekennzeichnet, daß
es aus einem kohlenstofffaserverstärkten Kohlenstoffkörper (4, 5, 7) mit Kohlenstofffaserfilz als verstärkender und einem verkokten oder verkokten und graphitierten härtbaren Kunstharz besteht.

4. Druckfestes, wärmeisolierendes Teil (4, 5, 6, 7) eines Preßstempels (3, 3', 3'', 3''') für eine Heißpresse (1) nach den Patentansprüchen 1 bis 3,
dadurch gekennzeichnet, daß
es mit einem oxidationshemmenden Mittel imprägniert ist.

5. Druckfestes, wärmeisolierendes Teil (4, 5, 6, 7) eines Preßstempels (3, 3', 3'', 3''') für eine Heißpresse (1) nach den Patentansprüchen 1 bis 4,
dadurch gekennzeichnet, daß
es mit einem oxidationshemmenden Mittel aus der Gruppe $Al(H_2PO_4)_3$ und $NH_4H_2PO_4$ imprägniert ist.

6. Druckfestes, wärmeisolierendes Teil (4, 5, 6, 7) eines Preßstempels (3, 3', 3'', 3''') für eine Heißpresse (1) nach den Patentansprüchen 1 bis 5,
dadurch gekennzeichnet, daß
mindestens eine der sich mit den anderen Oberflächen des Preßstempels (3, 3', 3'', 3''') berührenden

7

Teile (4, 5, 7) mit einer Graphitfolie (6) belegt ist.

Fig. 1

**Fig. 2**